Europäisches Patentamt

European Patent Office

Office européen des brevets

(19)

(11) Veröffentlichungsnummer: **0 280 954 B1**

# EUROPÄISCHE PATENTSCHRIFT

(45) Veröffentlichungstag der Patentschrift: 24.04.91

(51) Int. Cl.⁵: **G06F  12/08**

(21) Anmeldenummer: 88102211.5

(22) Anmeldetag: 15.02.88

(54) **Verfahren zur Steuerung des Datenaustausches zwischen Verarbeitungseinheiten und einem Speichersystem mit Cachespeicher in Datenverarbeitungsanlagen, sowie ein entsprechend arbeitender Cachespeicher.**

(30) Priorität: 16.02.87 DE 3704864

(43) Veröffentlichungstag der Anmeldung:
07.09.88 Patentblatt  88/36

(45) Bekanntmachung des Hinweises auf die
Patenterteilung:
24.04.91 Patentblatt  91/17

(84) Benannte Vertragsstaaten:
AT BE CH DE FR GB IT LI NL SE

(56) Entgegenhaltungen:
EP-A- 0 029 517
EP-A- 0 054 888
EP-A- 0 100 943
EP-A- 0 167 089
US-A- 4 084 234

(73) Patentinhaber: **Siemens Aktiengesellschaft**
**Wittelsbacherplatz 2**
**W-8000 München 2(DE)**

(72) Erfinder: **Bräuer, Gerald, Dipl.-Ing.**
**Robert-Koch-Strasse 28**
**W-8012 Ottobrunn(DE)**

## Beschreibung

Verfahren zur Steuerung des Datenaustausches zwischen Verarbeitungseinheiten und einem Speichersystem mit Cachespeicher in Datenverarbeitungsanlagen, sowie ein entsprechend arbeitender Cachespeicher

Die Erfindung betrifft ein Verfahren zur Steuerung des Datenaustausches zwischen Verarbeitungseinheiten und einem Speichersystem mit Cachespeicher in Datenverarbeitungsanlagen entsprechend dem Oberbegriff des Patentanspruches 1, sowie einen entsprechend arbeitenden Cachespeicher.

Die Verwendung von Cachespeichern in Datenverarbeitungsanlagen ist allgemein geläufig, zum Beispiel durch Computing Surveys, Vol.14, No.3 Sept.82, Seiten 473 bis 530. Die beschränkte Speicherkapazität des Cachespeichers im Vergleich zum Arbeitsspeicher zwingt häufig dazu, Daten zwischen dem Cachespeicher und dem Arbeitsspeicher auszutauschen, wobei zwei verschiedene Verfahren Anwendung finden, um sicherzustellen, daß die Daten im Arbeitsspeicher jeweils auf dem neuesten Stand gehalten werden, da der Cachespeicher lediglich eine zeitlich begrenzte Pufferspeicherfunktion ausübt.

Beim ersten Verfahren werden alle im Cachespeicher zu ändernden Daten nach ihrer Änderung unmittelbar auch in den Arbeitsspeicher übertragen ("Store-through"-Verfahren). Beim anderen Verfahren werden Änderungen vorerst nur an den im Cachespeicher gespeicherten Daten vorgenommen und geänderte Daten nur dann in den Arbeitsspeicher übertragen, wenn ein von geänderten Daten belegter Speicherbereich im Cachespeicher für andere Daten benötigt wird ("Copy-back"-Verfahren), zum Beispiel genannte Literaturstelle, Abschnitt 2.5, Seiten 5 bis 502.

Beide Verfahren können durch zusätzliche Zwischenspeicherung der Daten unterstützt werden, so beim Copy-back"-Verfahren durch Zwischenspeicherung der in den Arbeitsspeicher auszulagernden gernden Daten, um im Cachespeicher für die benötigten neuen Daten Platz zu schaffen und um eine Überschneidung zwischen Lesen der neuen Daten und Rückschreiben der alten geänderten Daten zu vermeiden, oder beim "Store-through"-Verfahren durch Zwischenspeicherung der an den Arbeitsspeicher weiterzuleitenden geänderten Daten, um die Anforderungen der Verarbeitungseinheiten schneller abschließen zu können, zum Beispiel genannte Literaturstelle auf Seite 501, unter Abschnitt "5. Buffering".

Durch die europäische Patentanmeldung 0 167 089 ist mit Bezug auf das "Copy back"- oder "Store-in"-Verfahren weiterhin eine Lösung bekannt, bei der sowohl ein gesonderter Ausgabespeicher für die Zwischenspeicherung der in den Arbeitsspeicher auszulagernden Daten als auch ein gesonderter Eingabespeicher für die Zwischenspeicherung der vom Arbeitsspeicher und/oder der Verarbeitungseinheit in den Cachespeicher zu übertragenden Daten vorgesehen ist, um die einzelnen Datenaustauschvorgänge unabhängiger gestalten zu können und um dadurch die Speichervorgänge zu beschleunigen, wenn die von einer Anforderung betroffenen Daten nicht im Cachespeicher vorhanden sind.

Aufgabe der Erfindung ist es daher, die Leistungsfähigkeit bei einem nach dem "Copy-back"-Verfahren betriebenen Cachespeicher mit gesondertem Ein- und Ausgabespeicher weiter zu steigern und die mit einer Anforderung an den Cachespeicher verbundenen Arbeitsvorgänge so zu gestalten, daß eine möglichst frühzeitige Aufhebung der Anforderungssperre für die Verarbeitungseinheiten möglich ist.

Diese Aufgabe wird im Prinzip durch die kennzeichnenden Merkmale des Patentanspruches 1 gelöst. Danach werden auch die im Eingabespeicher bereits zwischengespeicherten Daten so behandelt, als wären sie bereits Bestandteil des Datenspeicherteiles des Cachespeichers. Anforderungen können daher schon erledigt werden, wenn die gewünschten Daten bereits im Eingabespeicher greifbar sind, ohne daß erst die Übernahme in den Datenspeicherteil des Cachespeichers abgewartet werden muß.

Erst wenn eine der nachfolgenden Anforderungen einen Zugriff zum Arbeitsspeicher erfordert, muß der Eingabespeicher für die neuen Daten geräumt sein. Um auch in diesem Falle den Steuerungsmechanismus des Cachespeichers zu vereinfachen, ist es entsprechend der Weiterbildung von Anspruch 2 zweckmäßig, den Eingabespeicher immer erst bei einem nachfolgend notwendig werdenden Zugriff zum Arbeitsspeicher zu leeren. Die Umspeicherung wird damit grundsätzlich in einen Zeitabschnitt verlegt, in dem sowieso auf die neuen Daten aus dem Arbeitsspeicher gewartet werden muß.

Sind im Eingabespeicher gültige Daten zwischengespeichert, muß wenigstens eine Dateneinheit bereits in den Datenspeicherteil umgespeichert sein, damit bei Schreibanforderungen die bestehende Anforderungssperre aufgehoben werden kann. Auch wird in diesem Fall die Anforderung an den Arbeitsspeicher zweckmäßig erst weitergeleitet, wenn die erste Dateneinheit aus dem Eingabespeicher in den Datenspeicherteil übertragen ist, um eine einfache Abstimmung mit der Übertragung der restlichen Daten in den Datenspeicherteil zu ermöglichen, so daß der Eingabespeicher auf jeden Fall geräumt ist, wenn die neuen Daten vom Arbeitsspeicher geliefert werden.

Letzteres läßt sich bei einer Weiterbildung entsprechend Anspruch 4 in einfacher Weise erreichen, wenn die im Eingabespeicher vorhandenen Daten zunächst parallel an einen gesonderten Sicherungsspeicher übergeben werden. Der Eingabespeicher ist dann mit einem Übergabeschritt geleert und für die Aufnahme neuer Daten bereit. In diesem Fall kann die Anforderung an den Arbeitsspeicher unmittelbar weitergeleitet werden, da die Umspeicherung vom Sicherungsspeicher in den Datenspeicherteil von der Übernahme der Daten aus dem Arbeitsspeicher in den Eingabespeicher vollkommen entkoppelt ist und zeitlich parallel zueinander ablaufen kann.

Um zu vermeiden, daß für die Übertragung der auszulagernden Daten vom Cachespeicher in den gesonderten Ausgabespeicher und für die Übertragung der im gesonderten Eingabespeicher zwischengespeicherten Daten in den Cachespeicher letzterer jeweils gesondert angesteuert werden muß, kann gemäß einer Weiterbildung der Erfindung entsprechend Anspruch 5 das erforderliche Lesen und Schreiben für die einzelnen Speicherabschnitte des Cachespeichers auch überlappend im Wechselspiel erfolgen. Die Übergabe vom Ausgabespeicher an den Arbeitsspeicher verzögert sich zwar dadurch, jedoch kann die mit jeder Anforderung an den Cachespeicher gesetzte Anforderungssperre bereits aufgehoben werden, wenn die im Eingabespeicher zwischengespeicherten Daten in den Cachespeicher übertragen sind.

Entsprechend der Weiterbildung gemäß Anspruch 6 kann darüber hinaus bei Schreibanforderungen mit Zugriff zum Arbeitsspeicher die Anforderungssperre bereits aufgehoben werden, wenn die mit der Schreibanforderung bereitgestellte Dateneinheit in den Eingabespeicher zur Zwischenspeicherung übertragen ist. Jedoch können vor Abschluß der laufenden Schreibanforderung anfallende neue Anforderungen für den Cachespeicher erst dann erledigt werden, wenn sie keinen Zugriff zum Arbeitsspeicher erfordern und die neuen Daten zugriffsbereit sind. Im vorliegenden Falle also erst nach der Übernahme der neuen Daten in den Cachespeicher. In der Zwischenzeit aber kann eine weitere Anforderung bereits entgegengenommen und geprüft werden.

Auch können weitere Anforderungen unabhängig davon bearbeitet werden, ob im Ausgabespeicher noch auszulagernde Daten zwischengespeichert sind und wie lange diese Zwischenspeicherung bereits andauert. Die auszulagernden Daten können vielmehr zu irgendeinem beliebigen günstigen Zeitpunkt, wenn die Schnittstelle zum Arbeitsspeicher nicht anderweitig belegt ist, übertragen werden. Um den Arbeitsablauf aber zu vereinfachen und um zusätzliche Kontrollmechanismen zu vermeiden, ist es entsprechend der Weiterbildung von Anspruch 5 zweckmäßig, bei einer einen Zugriff zum Arbeitsspeicher erfordernden nachfolgenden Anforderung den Ausgabespeicher erst zu leeren, bevor die neue Anforderung an den Arbeitsspeicher weitergeleitet wird, damit im Falle einer möglichen erneuten Auslagerung die Anforderung an den Arbeitsspeicher nicht abgebrochen werden muß.

Insgesamt ermöglicht die Erfindung damit eine Vielzahl von Lösungsvarianten zur Steigerung der Leistungsfähigkeit des Cachespeichers.

Ein für die Durchführung der verschiedenen Verfahren gemäß der Erfindung geeigneter Cachespeicher ergibt sich aus den Merkmalen des Patentanspruchs 8, ergänzt mit den Weiterbildungen entsprechend den Ansprüchen 9 bis 14.

Einzelheiten der Erfindung seien nachfolgend anhand von in der Zeichnung dargestellten Ausführungsbeispielen näher erläutert. Im einzelnen zeigen

FIG 1 ein Übersichtsblockschaltbild eines Cachespeichers gemäß der Erfindung,

FIG 2 ein Ablaufdiagramm für den Prüf- und HIT-Zyklus eines Cachespeichers nach FIG 1 mit Ausnutzung des Eingabespeichers als zusätzliche Datenbank,

FIG 3A und 3B ein Ablaufdiagramm für den MISS-Zyklus in Ergänzung des Ablaufdiagramms von FIG 2 und

FIG 4A und 4B ein Ablaufdiagramm für den MISS-Zyklus in Ergänzung des Ablaufdiagrammes von FIG 2 bei Verwendung eines zusätzlichen Sicherungsspeichers.

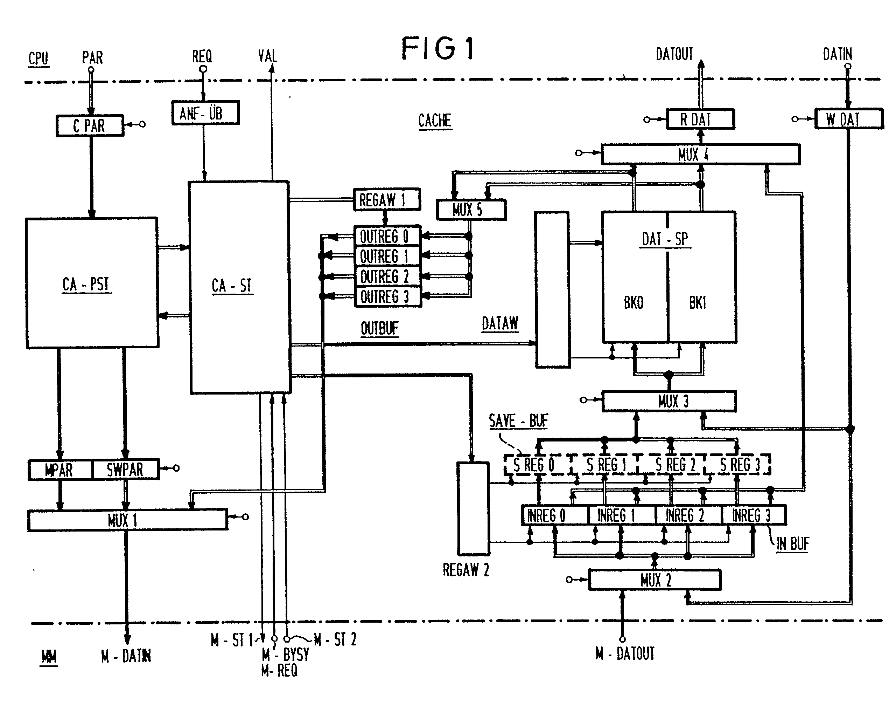

Das Übersichtsblockschaltbild von FIG 1 zeigt den prinzipiellen Aufbau eines Cachespeichers. Dieser besteht im wesentlichen aus einem Datenspeicherteil DAT-SP, einem Steuerspeicherteil CA-PST und einer gemeinsamen Cachespeichersteuerung CA-ST.

Der Datenspeicherteil DAT-SP weist zum Beispiel zwei Speichersätze oder -bänke BK0 und BK1 mit jeweils einer Vielzahl von Speicherbereichen auf, die in an sich bekannter Weise über eine Auswahlsteuerung DATAW auswählbar sind, wobei eine nicht gesondert gezeigte Schreiblesesteuerung entscheidet, welche der Speicherbänke mit einem Schreib- oder Leseimpuls anzusteuern ist, damit nur einer der durch die Auswahlsteuerung DATAW gleichzeitig ausgewählten Speicherbereiche Daten liefern oder aufnehmen kann.

Der Steuerspeicherteil CA-PST ist ähnlich aufgebaut und entsprechend den Speicherbänken für die Daten im Datenspeicherteil DAT-SP in Speicherbänke für die zugehörige Adresse und eine gemeinsame Speicherbank für Steuerkennzeichen gegliedert. Einbezogen ist der Einfachheit halber auch die HIT/MISS-Logik zur Überwachung, ob einer Anforderung entsprechende gültige Daten im Datenspeicherteil DAT-SP greifbar sind oder nicht, und eine Ersetzungslogik zur Ermittlung des Speicherbereichs im Datenspeicherteil DAT-SP, der gegebenenfalls mit neuen Daten aus dem Arbeitsspeicher MM zu belegen ist. Alle übrigen Steuerungsfunktionen des Cachespeichers sind in der Cachespeichersteuerung CA-ST zusammengefaßt.

Entsprechend der üblichen Arbeitsweise werden Anforderungen REQ von angeschlossenen Verarbeitungseinheiten CPU mit einer Anforderungsüberwachungseinrichtung ANF-ÜB überwacht und jeweils eine der Anforderungen bei gleichzeitiger Durchschaltung der zugehörigen Schnittstellenleitungen zum Cachespeicher CACHE ausgewählt, wenn dieser frei ist. Aufgrund einer der Cachespeichersteuerung CA-ST gemeldeten angenommenen Anforderung werden dann die bereitgestellten Informationen PAR und gegebenenfalls DATIN in die Eingangsregister CPAR und WDAT übernommen. Anhand der mit den Anforderungsparametern PAR bereitgestellten Datenadresse prüft dann der Steuerspeicherteil CA-PST, ob die gewünschten Daten im Datenspeicherteil DAT-SP verfügbar sind. Das Ergebnis wird der Cachespeichersteuerung CA-ST mitgeteilt, die daraufhin alle notwendigen Steuervorgänge einleitet.

Sind die gewünschten Daten verfügbar, wird über die Auswahlsteuerung DATAW der zugehörige Speicherbereich angesteuert und bei einer Schreibanforderung der im Eingangsregister WDAT bereitstehende Datenteil in den Datenspeicher DAT-SP übernommen, oder aber bei einer Leseanforderung der gewünschte Datenteil in das Ausgaberegister RDAT und von dort mit einem Gültigkeitssignal VAL zur anfordernden Verarbeitungseinheit CPU übertragen. Zeitlich parallel dazu werden außerdem die Steuerdaten im Steuerspeicherteil CA-PST angepaßt. Danach steht der Cachespeicher CACHE für die Bearbeitung einer weiteren Anforderung wieder zur Verfügung.

Sind die gewünschten Daten nicht verfügbar, dann wird die Anforderung zusammen mit dem die Zugriffsart festlegenden Befehl an den Arbeitsspeicher MM weitergeleitet, indem die notwendigen Parameter in das Anforderungsregister MPAR übernommen und als Eingabedaten M-DATIN zur Verfügung gestellt werden, wobei ein Anforderungssignal M-ST1 bei freiem Arbeitsspeicher (M-BUSY = 0) die Übernahme der Parameterdaten bewirkt. Die im weiteren Verlauf auf den Schnittstellenleitungen M-DATOUT zur Verfügung gestellten Daten werden dann abhängig vom Begleitsignal M-ST2 vom Cachespeicher CACHE übernommen.

Dem Eingang des Datenspeicherteils DAT-SP ist ein gesonderter Eingabespeicher INBUF vorgeschaltet, der die Dateneinheiten der vom Arbeitsspeicher MM gelieferten Daten einzeln nacheinander übernimmt. Im vorliegenden Fall sei angenommen, daß die jeweilige Datenmenge vier Dateneinheiten oder vier Doppelworte zu je acht Byte umfaßt. Entsprechend gliedert sich der Eingabespeicher INBUF in vier als Register INREG0 bis INREG3 ausgebildete Speicherabschnitte, die von einer Auswahlsteuerung REGAW2 einzeln auswählbar sind.

Über einen vorgeschalteten Auswahlschalter MUX2 kann der Eingabespeicher INBUF außerdem vom Eingaberegister WDAT aus angesteuert werden, so daß Schreibdatenteile der anfordernden Verarbeitungseinheit CPU mit den vom Arbeitsspeicher MM übernommenen Daten gemischt werden können, wobei zugleich ein bytegerechte Eingliederung abhängig von der aus der Zugriffsadresse abgeleiteten und der Auswahlsteuerung REGAW2 zur Verfügung gestellten Byteadresse möglich ist.

Weiterhin ist der Ausgang des Eingabespeichers INBUF über einen Auswahlschalter MUX4 auf das Leseregister RDAT durchschaltbar, so daß ein zu lesender Datenteil unmittelbar und unabhängig von der Übergabe der im Eingabespeicher INBUF zwischengespeicherten Daten an den Datenspeicherteil DAT-SP zur anfordernden Verarbeitungseinheit CPU weitergeleitet werden kann.

Analog zum Eingabespeicher INBUF ist am Ausgang des Datenspeicherteils DAT-SP ein gesonderter Ausgabespeicher OUTBUF angeschlossen, der in gleicher Weise wie der Eingabespeicher INBUF aufgebaut ist und aus die einzelnen Speicherabschnitte bildenden Registern REGOUT0 bis REGOUT3 besteht, die durch eine Auswahlsteuerung REGAWI einzeln auswählbar sind. Die zu übernehmenden Dateneinheiten werden dabei nacheinander über den Auswahlschalter MUX5 vom Datenspeicherteil DAT-SP geliefert. Der Ausgang des Ausgabespeichers OUTBUF ist über den Auswahlschalter MUX1 zu den Datenschnittstellenleitungen M-DATIN zum Arbeitsspeicher MM durchschaltbar, so daß die einzelnen Dateneinheiten nacheinander zusammen mit einem Steuersignal M-ST1 der Cachespeichersteuerung CA-ST an den Arbeitsspeicher MM weitergeleitet werden können.

Um sicherzustellen, an welche Adresse des Arbeitsspeichers MM die Daten aus dem Ausgabespeicher OUTBUF zu übertragen sind, ist neben dem Parameterregister MPAR für Anforderungen an den Arbeitsspeicher MM ein weiteres Parameterregister SWPAR vorgesehen, dessen Inhalt aus der Adresse im Steuerspeicherteil CA-PST abgeleitet und jeweils als erste Dateneinheit im Vorlauf zu den Dateneinheiten aus dem Ausgabespeicher OUTBUF übertragen wird.

Die Auswahlsteuerungen DATAW für den Datenspeicherteil DAT-SP, REGAWI für den Ausgabespeicher OUTBUF und REGAW2 für den Eingabespeicher INBUF können durch eine gesonderte

Synchronsteuerung innerhalb der Cachespeichersteuerung CA-ST so aufeinander abgestimmt sein, daß die Übernahme der einzelnen Dateneinheiten eines zu räumenden Speicherbereiches im Datenspeicherteil DAT-SP überlappend mit der Übernahme von im Eingabespeicher INBUF bereitstehenden Daten in den Datenspeicherteil DAT-SP erfolgen kann, indem jeweils nach Auswahl eines Speicherabschnittes im Datenspeicherteil DAT-SP durch die Auswahlsteuerung DATAW die dort gespeicherte Dateneinheit gelesen und in den Ausgabespeicher OUTBUF übertragen wird und anschließend in dem frei gewordenen Speicherabschnitt eine Dateneinheit aus dem Eingabespeicher INBUF eingeschrieben wird. Die einzelnen Speicherabschnitte im Datenspeicherteil DAT-SP brauchen dann zum Lesen und Schreiben nicht gesondert angesteuert zu werden.

Damit der Eingabespeicher INBUF zugleich als zusätzliche Speicherbank des Cachespeichers CACHE dienen kann, so daß auch Daten bereits verfügbar sind, die noch nicht in den Datenspeicherteil DAT-SP übernommen sind, muß zur Sicherung der Adresse für die im Eingabespeicher INBUF zwischengespeicherten Daten im Steuerspeicherteil CA-PST noch ein zusätzlicher Speicherabschnitt für die zugehörige vollständige Adresse sowie ein zusätzlicher Vergleicher zum Adressenvergleich mit der Anforderungsadresse vorgesehen werden. Dieser Vergleicher wird wirksam geschaltet, wenn die übliche Überprüfung des Steuerspeicherteils CA-PST eine Fehlanzeige oder einen MISS ergeben hat, wobei die normalerweise an den Arbeits-speicher MM weiterzuleitende Anforderung zu-nächst unterdrückt und nur wirksam wird, wenn die gewünschten Daten auch im Eingabespeicher INBUF nicht greifbar sind, der zusätzliche Vergleicher also ebenfalls ein negatives Prüfergebnis oder einen MISS liefert.

Zusätzlich kann zwischen dem Ausgang des Eingabespeiches INBUF und dem Eingang des Datenspeicherteils DAT-SP noch ein gesonderter Sicherungsspeicher SAVE-BUF vorgesehen sein, was gestrichelt angedeutet ist. Dieser Sicherungsspeicher SAVE-BUF weist denselben Aufbau wie der Eingabespeicher INBUF auf mit je einem Register SREG0 bis SREG3 als Speicherabschnitt für jeweils eine Dateneinheit. Die einander entsprechenden Register beider Speicher INBUF und SAVE-BUF sind jeweils in Reihe geschaltet, so daß der gesamte Speicherinhalt des Eingabespeichers INBUF vom Sicherungsspeicher SAVE-BUF schlagartig übernommen werden kann. Die Übernahme der Dateneinheiten aus dem Sicherungsspeicher SAVE-BUF durch den Datenspeicherteil DAT-SP erfolgt dagegen in Abhängigkeit von der Auswahlsteuerung REGAW2 in Abstimmung mit der Auswahlsteuerung DATAW wiederum einzeln nacheinander.

Der gesamte Steuerungsablauf des Cachespeichers CACHE wird von der Cachespeichersteuerung CA-ST überwacht und gesteuert, die entspre-chend den nachfolgend erläuterten Ablaufdiagram-men arbeitet.

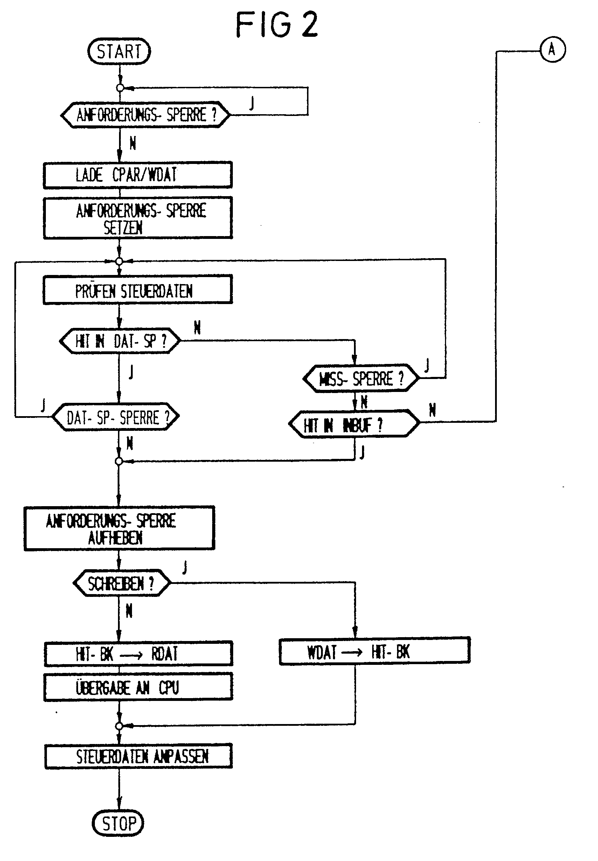

Sobald von der Anforderungsüberwachungseinrichtung ANF-ÜB die Anforderung einer Verarbeitungseinheit CPU ausgewählt ist, wird dies der Cachespeichersteuerung CA-ST mitgeteilt und gemäß FIG 2 der eigentliche Prüfzyklus gestartet, wenn keine Anforderungssperre besteht. Als erstes werden die an der Anforderungsschnittstelle bereitgestellten Informationen PAR und bei einer Schreibanforderung auch DATIN in die Übernahmeregister CPAR und WDAT übernommen und die Anforderungssperre gesetzt. Mit der in den Anfor-derungsparametern PAR enthaltenen Speicher-adresse für die benötigten Daten werden dann die im Steuerspeicherteil CA-PST enthaltenen Steuerdaten überprüft. Sind die gewünschten Daten im Datenspeicherteil DAT-SP vorhanden und gültig, wird dies der Cachespeichersteuerung CA-ST mit einem Treffer- oder HIT-Signal gemeldet und die zugehörige Adresse für die Auswahlsteuerung DATAW bereitgestellt. Damit kann in den HIT-Zyklus übergeleitet werden.

Dieser HIT-Zyklus wird aber nur gestartet, wenn keine vom Datenspeicherteil DAT-SP ausgelöste Sperre gesetzt ist, die anzeigt, daß im Eingabespeicher INBUF vorhandene gültige Daten vorher in den Datenspeicherteil DAT-SP zu übertragen sind. Bei einer solchen Sperre werden daher die Steuerdaten nochmals überprüft und die Schleife wiederholt, bis die Sperre aufgehoben ist.

Mit Start des HIT-Zyklus wird als erstes die bestehende Anforderungssperre aufgehoben, so daß bereits eine weitere Anforderung ausgewählt und geprüft werden kann. Liegt eine Schreibanforderung vor, werden die im Übernahmeregister WDAT zwischengespeicherten Schreibdaten in den durch die bereitgestellte Adresse von der Auswahlsteuerung DATAW ausgewählten Speicherabschnitt des Datenspeicherteils DAT-SP eingeschrieben, während bei einer Leseanforderung die Daten aus dem ausgewählten Speicherabschnitt gelesen und in das Übernahmeregister RDAT übertragen werden, von wo sie dann an die anfordernde Verarbeitungseinheit CPU weitergeleitet werden. Schließlich werden noch die zugehörigen Steuerdaten im Steuerspeicherteil CA-PST angepaßt, zum Beispiel bei einer Schreibanforderung ein die Änderung der Daten anzeigendes Steuerbit gesetzt und die die Ersetzungsrangfolge festlegenden Steuerbits geändert. Der HIT-Zyklus ist damit beendet.

Ist die Überprüfung der Steuerdaten negativ verlaufen, und ist keine MISS-Sperre gesetzt, die anzeigt, daß ein vorangehend eingeleiteter MISS-Zyklus noch nicht abgeschlossen ist und die Daten im Datenspeicherteil DAT-SP daher gegebenenfalls noch verändert werden können, dann wird in Auswirkung der Erfindung auch geprüft, ob ein HIT für den Eingabespeicher INBUF gegeben ist. Ist dies der Fall, wird ebenfalls auf den vorangehend bereits erläuterten HIT-Zyklus übergeleitet. Führt dagegen auch diese Überprüfung zu einem MISS, dann wird schließlich ein MISS-Zyklus eingeleitet.

Andererseits werden für den Fall, daß eine MISS-Sperre besteht, analog wie bei einer vom Datenspeicherteil DAT-SP gesetzten Sperre die Steuerdaten erneut überprüft und auch diese Schleife wiederholt, bis die MISS-Sperre aufgehoben ist.

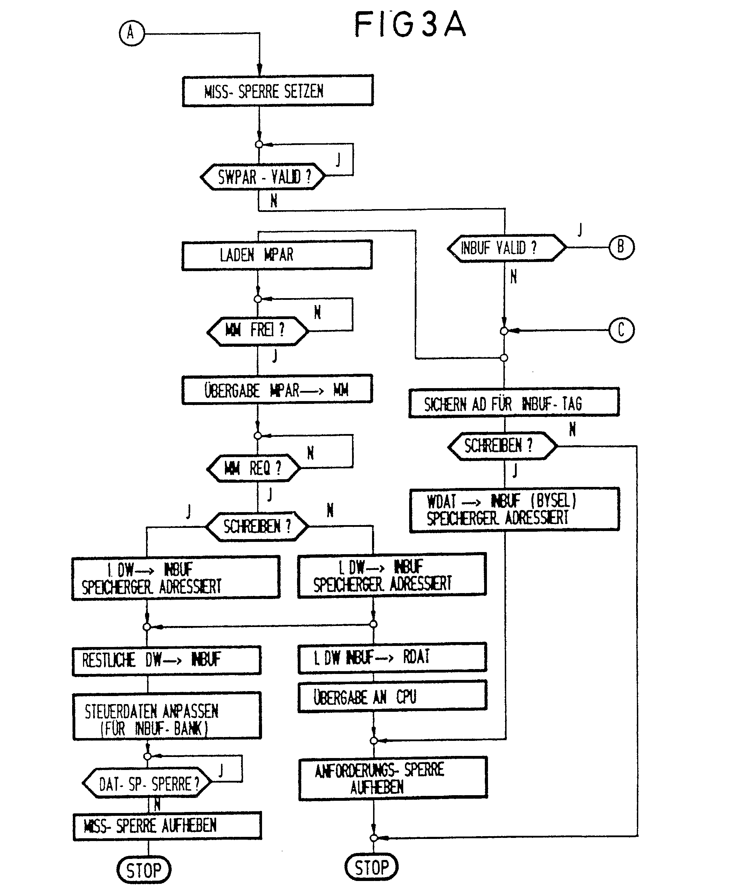

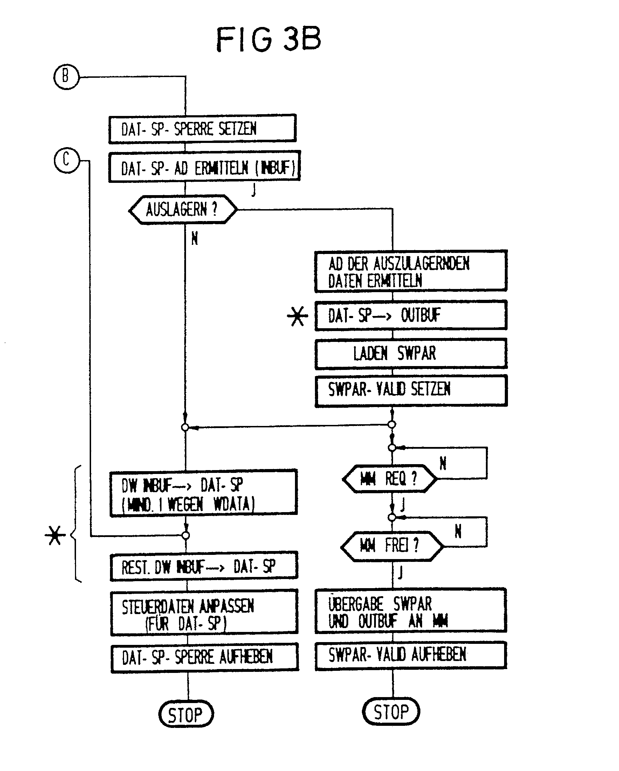

Das Ablaufdiagramm für den MISS-Zyklus ist in FIG 3A und FIG 3B dargestellt. Dabei wird zunächst die MISS-Sperre gesetzt und damit verhindert, daß weitere Anforderungen bearbeitet werden. Dann wird zweckmäßig geprüft, ob im Ausgabespeicher OUTBUF noch gültige Daten vorhanden sind, die noch nicht an den Arbeitsspeicher MM übergeben sind, was daran erkennbar ist, daß die im Register SWPAR bereitgestellten Parameterdaten noch gültig sind.

Die dadurch bedingte Verzögerung stellt in einfacher Weise sicher, daß im Falle einer mit der zu bearbeitenden Anforderung verbundenen erneuten Auslagerung der Ausgabespeicher OUTBUF frei ist und damit sonst mögliche Überschneidungen vermieden werden.

Erst wenn die noch ausstehende Auslagerung eingeleitet und die Parameterdaten im Register SWPAR für ungültig erklärt worden sind, kann der MISS-Zyklus weitergeführt werden.

Dabei ist vorausgesetzt, daß im Eingabespeicher INBUF vorhandene und noch in den Datenspeicherteil DAT-SP des Cachespeichers zu übertragende Daten nicht zu einem beliebigen Zeitpunkt, wenn der Datenspeicherteil frei ist, sondern immer erst dann übertragen werden, wenn eine nachfolgende Cacheanforderung wegen eines MISS an den Arbeitsspeicher MM weiterzuleiten ist. Um dabei sicherzustellen, daß bei einer Schreibanforderung das Eingangsregister WDAT möglichst bald geräumt werden kann, um die bestehende Anforderungssperre aufheben zu können, ist es notwendig, wenigstens den betroffenen Speicherabschnitt im Eingabespeicher INBUF für die Aufnahme des neuen Schreibdatenteiles aus dem Register WDAT zu räumen.

Wenn daher, weil keine Daten aus dem Ausgabespeicher OUTBUF mehr rückzuspeichern sind, der Inhalt des Registers SWPAR für ungültig erklärt ist, wird zunächst geprüft, ob im Eingabespeicher INBUF enthaltene Daten noch gültig und daher umzuspeichern sind (FIG 3A). Ist dieses der Fall, wird als erstes eine Sperre für den Datenspeicherteil DAT-SP gesetzt (FIG 3B), die den Zugriff für nachfolgende Anforderungen vorübergehend sperrt - man siehe Fig 2. Sodann wird mit der Adresse für die im Eingabespeicher INBUF gespeicherten Daten anhand des Steuerspeicherteils CA-PST eine Adresse für den die Daten aufnehmenden Speicherbereich im Datenspeicherteil DAT-SP ermittelt. Ist dieser Speicherbereich ohne Auslagerung der dort gespeicherten Daten verfügbar, werden die Dateneinheiten aus dem Eingabespeicher INBUF unmittelbar in den Datenspeicherteil DAT-SP übertragen, wobei wegen einer möglichen Schreibanforderung die Auswahl der ersten zu übertragenden Dateneinheit abhängig von der mit der laufenden Anforderung gelieferten Schreibadresse erfolgt. Nach Anpassung der zugehörigen Steuerdaten im Steuerspeicherteil CA-PST kann dann die gesetzte Sperre für den Datenspeicherteil DAT-SP wieder aufgehoben werden.

Sind jedoch Daten aus dem ermittelten Speicherbereich im Datenspeicherteil DAT-SP vorher auszulagern, dann wird die rechte Ablaufschleife im Ablaufdiagramm von FIG 3B durchlaufen.

Dazu wird die Adresse für den zu räumenden Speicherbereich im Datenspeicherteil DAT-SP in üblicher Weise durch die Ersetzungslogik im Steuerspeicherteil CA-PST in Verbindung mit dem MISS-Ergebnis der Steuerdatenüberprüfung bereitgestellt. Aus dem zugehörigen Speicherabschnitt des Steuerspeicherteils läßt sich dann die Adresse der auszulagernden Daten ermitteln, die nach Übernahme der auszulagernden Daten durch den Ausgabespeicher OUTBUF dem Register SWPAR als Teilparameter zusammen unter anderem mit einem Schreibbefehl übergeben wird. Durch Setzen eines entsprechenden Merkers wird die Bereitschaft zur Übertragung an den Arbeitsspeicher MM markiert.

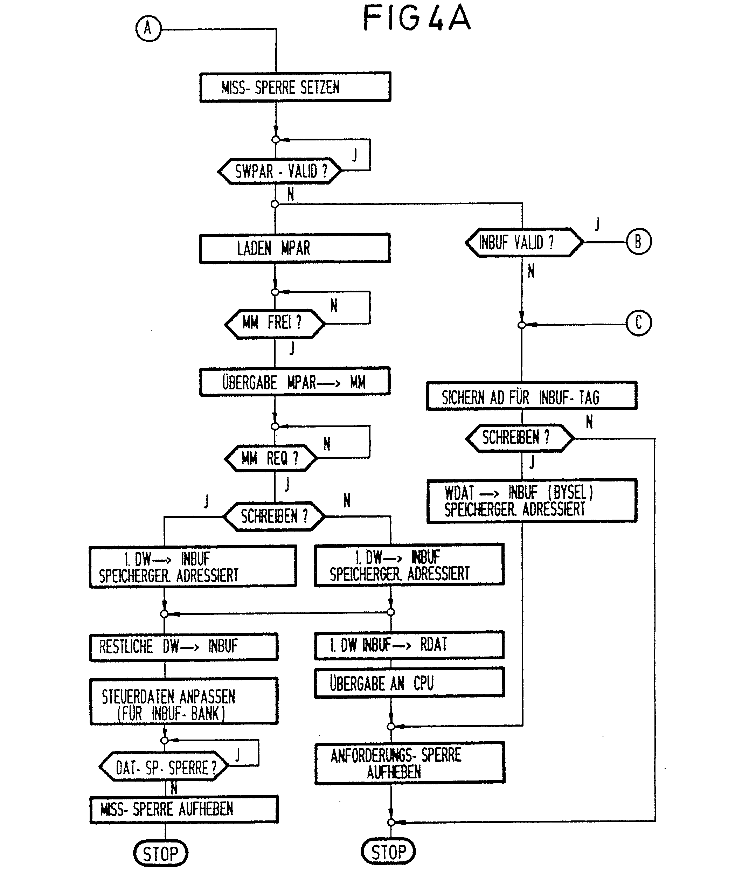

Ausgehend von dem so erreichten Ablaufzustand, kann nun die Übertragung der Daten aus dem Eingabespeicher INBUF in den Datenspeicherteil DAT-SP eingeleitet werden, um den Eingabepuffer INBUF für aus dem Arbeitsspeicher MM aufzunehmende Daten freizumachen - Überleitung in den linken Ablaufzweig von FIG 3B - und damit die Voraussetzung für die Weiterleitung der bestehenden Anforderung an den Arbeitsspeicher MM zu schaffen. Da es hierzu genügt, bei einer Schreibanforderung wenigstens einen Speicherabschnitt des Eingabespeichers INBUF geräumt zu haben, kann der eigentliche MISS-Zyklus (FIG 4A) bereits fortgesetzt werden, wenn die erste Dateneinheit den Eingabespeicher INBUF freigemacht hat. Es wird daher anschließend das Anforderungsregister MPAR mit den notwendigen Parametern für die vom Arbeitsspeicher MM anzufordernden Daten geladen und die Anforderung durch Übergabe der Daten aus dem Register MPAR an den Arbeitsspeicher MM weitergeleitet, wenn der Arbeitsspeicher MM frei ist.

Nach Rückmeldung des Arbeitsspeichers MM wird unabhängig von der Art der Anforderung zunächst die erste Dateneinheit speichergerecht adressiert in den Eingabespeicher INBUF übernommen. Handelt es sich um eine Leseanforderung, dann wird die erste Dateneinheit vom Eingabespeicher INBUF unmittelbar an das Leseregister RDAT weitergeleitet und von dort an die anfordernde Verarbeitungseinheit CPU übergeben. Da damit die Anforderung an den Cachespeicher CACHE erledigt ist, kann die Anforderungssperre wieder aufgehoben werden.

Zeitlich parallel dazu ablaufend werden - wie auch bei einer Schreibanforderung - gemäß dem linken unteren Ablaufzweig von FIG 3A die restlichen Dateneinheiten DW in den Eingabespeicher INBUF übernommen und dort zwischengespeichert. Anschließend werden die sich auf die Daten im Eingabespeicher INBUF als zusätzliche Bank beziehenden Steuerdaten angepaßt. Außerdem wird geprüft, ob nicht möglicherweise die Sperre für den Datenspeicherteil noch besteht, bevor schließlich die MISS-Sperre aufgehoben und der eigentliche MISS-Zyklus beendet wird. Da die Sperre für den Datenspeicherteil DAT-SP in der Regel wesentlich früher aufgehoben sein wird als die MISS-Sperre, können während eines laufenden MISS-Zyklus bereits eintreffende Cacheanforderungen unmittelbar nach Aufhebung der Anforderungssperre erledigt werden, wenn die angeforderten Daten im Datenspeicherteil DAT-SP greifbar sind.

Zeitlich parallel zur Weiterleitung einer Anforderung an den Arbeitsspeicher MM entsprechend dem linken Hauptablaufzweig von FIG 3A, wenn festgestellt ist, daß im Eingabepuffer keine gültigen Daten vorhanden sind, oder wenn die erste gültige Dateneinheit aus dem Eingabespeicher INBUF in den Datenspeicherteil DAT-SP gemäß dem linken Ablaufzweig von FIG 3B übernommen ist, wird auch die Adresse für die in den Eingabespeicher INBUF zu übernehmenden Daten gemäß dem rechten Ablaufzweig von FIG 3A gesichert, damit sie später für die Anpassung der zugehörigen Steuerdaten verfügbar ist.

Im Anschluß daran werden bei einer Schreibanforderung die im Register WDAT vorhandenen Daten adressengerecht unter Berücksichtigung des Byteadressenteils adressiert in den Eingabespeicher INBUF übernommen und später mit den vom Arbeitsspeicher MM gelieferten Daten gemischt. Man braucht daher nicht erst auf die Daten aus dem Arbeitsspeicher zu warten, so daß die Anforderungssperre wesentlich früher aufgehoben werden kann. Lediglich bei Leseanforderungen muß sie bestehen bleiben, bis die gewünschte Dateneinheit an die anfordernde Verarbeitungseinheit CPU übergeben ist.

Die Auslagerung der im Ausgabespeicher OUTBUF für die Übertragung in den Arbeitsspeicher MM bereitgestellten Daten kann erst erfolgen, wenn die angeforderten neuen Daten an den Cachespeicher übergeben sind. Daher ist in den rechten Ablaufzweig von FIG 3B nach dem Gültigerklären der Daten im Register SWPAR eine Warteschleife eingefügt, so daß eine Auslagerung frühestens nach der Rückmeldung REQ des Arbeitsspeichers MM erfolgen kann, wenn dieser wieder frei ist. Dabei werden dann zunächst der Inhalt aus dem Register SWPAR und anschließend die einzelnen Dateneinheiten DW aus dem Ausgabespeicher OUTBUF an den Arbeitsspeicher MM weitergeleitet. Danach wird der Gültigkeitsmerker für das Register SWPAR wieder gelöscht und dadurch die Beendigung des Auslagerungsvorganges angezeigt.

Wie in FIG 3B durch das Zeichen * links vom jeweiligen Funktionskasten angedeutet ist, kann das Lesen der Dateneinheiten aus dem zu räumenden Speicherbereich des Datenspeicherteils DAT-SP und das Einschreiben der Dateneinheiten vom Eingabespeicher INBUF in den geräumten Speicherbereich jeweils überlappend im Wechselspiel von Lesen und Schreiben durch eine entsprechend synchrone Steuerung der beteiligten Auswahlsteuerungen DATAW, REGAW1 und REGAW2 erfolgen, was den Steuerungsablauf erleichtert und auch beschleunigt.

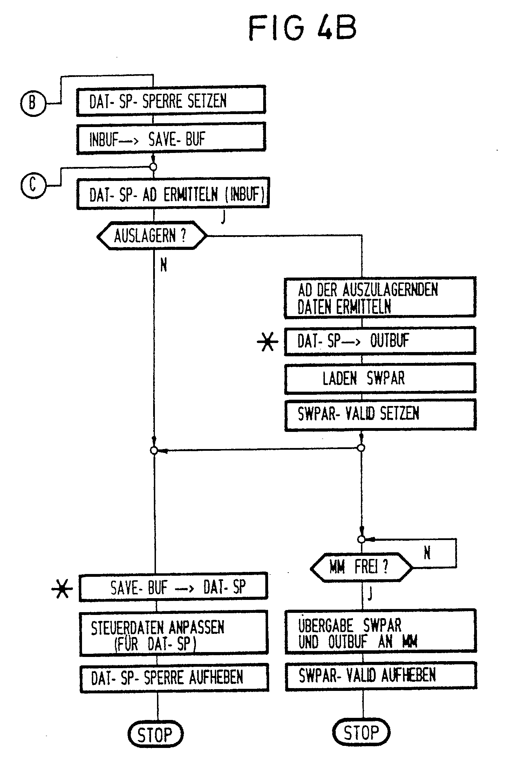

Wird im Cachespeicher zusätzlich ein dem Eingabespeicher INBUF nachgeschalteter Sicherungsspeicher SAVEBUF verwendet, dann vereinfacht sich das Ablaufdiagramm für den MISS-Zyklus, während das für den Prüf- und HIT-Zyklus gemäß FIG 2 unverändert bleibt. FIG 4A und 4B zeigen das gegenüber FIG 3A und FIG 3B geänderte Ablaufdiagramm für den MISS-Zyklus, wobei dieselbe Grundaufteilung beibehalten wurde. Die wesentlichen Änderungen bestehen darin, daß beim Ablaufteil von FIG 4A im Gegensatz zu dem von FIG 3A die Anforderungen an den Arbeitsspeicher MM direkt weitergeleitet werden und von keiner Umspeicherung innerhalb des Cachespeichers abhängig sind und daß beim Ablaufteil von FIG 4B im Gegensatz zu dem von FIG 3B nach Setzen der Sperre für den Datenspeicherteil DAT-SP der Inhalt des Eingabespeichers INBUF sofort in den Sicherungsspeicher SAVEBUF umgeladen wird, so daß der Eingabespeicher INBUF ohne wesentliche Verzögerung für die Aufnahme neuer Daten zur Verfügung steht und damit auch die rechte Ablaufschleife in FIG 4A für die Sicherung der Schreibdaten im Register WDAT früher angestoßen werden kann. Im weiteren Verlauf werden die Daten dann vom Sicherungsspeicher SAVEBUF und nicht vom Eingabespeicher INBUF in den Datenspeicherteil DAT-SP übernommen. Außerdem kann die Warteschleife für das Abwarten der Speicherrückmeldung REQ für die angeforderten Daten entfallen, da die Leseanforderung an den Arbeitsspeicher MM für neue Daten in jedem Falle früher zum Zuge kommt.

Auch bezüglich des Ausführungsbeispieles gemäß FIG 4A und FIG 4B gilt, daß - wie durch das Zeichen * links neben den Funktionskästchen angegeben - die Umspeicherung zwischen dem Datenspeicherteil DAT-SP und dem Ausgabespeicher OUTBUF sowie zwischen dem Sicherungsspeicher SAVEBUF und dem Datenspeicherteil DAT-SP überlappend im Wechselspiel erfolgen kann.

## Ansprüche

1. Verfahren zur Steuerung des Datenaustausches zwischen Verarbeitungseinheiten (CPU) und einem aus einem Arbeitsspeicher (MM) mit vorgeschaltetem Cachespeicher (CACHE) bestehenden Speichersystem in einer Datenverarbeitungsanlage, wobei nur im Cachespeicher (CACHE) vorhandene Daten den Verarbeitungseinheiten (CPU) zur Verfügung gestellt und von diesen geändert sowie geänderte Daten nur dann in den Arbeitsspeicher (MM) übertragen werden, wenn der zugehörige Speicherbereich im Datenspeicherteil (DAT-SP) des Cachespeichers (CACHE) für andere Daten benötigt wird, unter Verwendung eines Cachespeichers, mit einem gesonderten Eingabespeicher (INBUF) zur Zwischenspeicherung von aus dem Arbeitsspeicher (MM) gelesenen Daten vor der Übernahme in den Datenspeicherteil (DAT-SP) des Cachespeichers und mit einem gesonderten Ausgabespeicher (OUTBUF) zur Zwischenspeicherung von aus dem Datenspeicherteil (DAT-SP) des Cachespeichers in den Arbeitsspeicher (MM) auszulagernden geänderten Daten vor der Übernahme von neuen Daten in den geräumten Abschnitt des Datenspeicherteils (DAT-SP) bis zur Weiterleitung an den Arbeitsspeicher (MM), **dadurch gekennzeichnet,** daß vom Arbeitsspeicher (MM) an den Cachespeicher (CACHE) gelieferte, aber im gesonderten Eingabespeicher (INBUF) noch zwischengespeicherte Daten bei der Überprüfung des Cachespeichers (CACHE) auf das Vorliegen der gewünschten Daten im Rahmen der Bearbeitung einer nachfolgenden Zugriffsanforderung an den Cachespeicher als im Cachespeicher bereits vorhanden behandelt werden und daß die Adresse der im gesonderten Eingabespeicher (INBUF) zwischengespeicherten Daten bis zur Übernahme der Daten in den Datenspeicherteil (DAT-SP) jeweils ebenfalls zwischengespeichert und bei der Überprüfung von Anforderungen an den Cachespeicher (CACHE) berücksichtigt wird.

2. Verfahren nach Anspruch 1, **dadurch gekennzeichnet,** daß vom Arbeitsspeicher (MM) an den Cachespeicher (CACHE) gelieferte, aber im gesonderten Eingabespeicher (INBUF) noch zwischengespeicherte Daten erst bei einer einen Zugriff zum Arbeitsspeicher (MM) erfordernden nachfolgenden Anforderung aus dem gesonderten Eingabespeicher (INBUF) weitergeleitet werden, bevor die vom Arbeitsspeicher (MM) angeforderten neuen Daten geliefert werden, und daß Anforderungen an den Cachespeicher (CACHE) bereits als abgeschlossen gewertet werden, sobald die angeforderten neuen Daten im gesonderten Eingabespeicher (INBUF) als Bestandteil des Cachespeichers (CACHE) verfügbar sind.

3. Verfahren nach Anspruch 2, **dadurch gekennzeichnet,** daß bei einer einen Zugriff zum Arbeitsspeicher (MM) erfordernden Anforderung diese an den Arbeitsspeicher (MM) erst weitergeleitet wird, wenn von den aufgrund einer vorhergehenden Anforderung vom Arbeitsspeicher (MM) gelieferten, aber noch im gesonderten Eingabespeicher (INBUF) zwischengespeicherten Daten wenigstens die erste Dateneinheit in den Datenspeicherteil (DAT-SP) übernommen ist, und daß die restlichen zwischengespeicherten Dateneinheiten anschließend in den Datenspeicherteil (DAT-SP) übernommen werden, bevor die vom Arbeitsspeicher (MM) angeforderten neuen Daten vom Arbeitsspeicher geliefert werden.

4. Verfahren nach Anspruch 2, **dadurch gekennzeichnet,** daß bei einer einen Zugriff zum Arbeitsspeicher (MM) erfordernden Anforderung diese unmittelbar an den Arbeitsspeicher (MM) weitergeleitet wird und daß im gesonderten Eingabespeicher (INBUF) noch zwischengespeicherte Daten zunächst an einen Sicherungsspeicher (SAVE-BUF) und von dort an den Datenspeicherteil (DAT-SP) weitergeleitet werden.

5. Verfahren nach einem der Ansprüche 1 bis 4, **dadurch gekennzeichnet,** daß die Übernahme von Daten aus dem Datenspeicherteil (DAT-SP) in den gesonderten Ausgabespeicher (OUTBUF) und die Übernahme von bereitgestellten neuen Daten in den Datenspeicherteil (DAT-SP) überlappend im Wechselspiel von Ausspeicherung und nachfolgender Einspeicherung jeweils einer Dateneinheit der auszutauschenden Daten erfolgt.

6.     Verfahren nach einem der Ansprüche 1 oder 5, **dadurch gekennzeichnet,**
- daß bei einer einen Zugriff zum Arbeitsspeicher (MM) auslösenden Schreibanforderung an den Cachespeicher (CACHE) die mit der Schreibanforderung bereitgestellte Dateneinheit im Vorlauf zur Zwischenspeicherung der aus dem Arbeitsspeicher (MM) angeforderten Daten bereits einheitsgerecht zwischengespeichert und mit den nachfolgend aus dem Arbeitsspeicher (MM) eintreffenden Dateneinheiten der zwischenzuspeichernden Daten gemischt wird und
- daß der Cachespeicher (CACHE) vorzeitig für neue Anforderungen durch die Verarbeitungseinheiten (CPU) freigegeben wird, wobei vor Abschluß der Schreibanforderung anfallende Forderungen nur berücksichtigt werden, wenn sie keinen Zugriff zum Arbeitsspeicher (MM) erfordern, und die neuen Daten zugriffsbereit sind.

7.     Verfahren nach einem der Ansprüche 1 bis 6, **dadurch gekennzeichnet,** daß bei einer einen Zugriff zum Arbeitsspeicher (MM) erfordernden Anforderung diese an den Arbeitsspeicher (MM) erst weitergeleitet wird, wenn aus dem Cachespeicher (CACHE) aufgrund einer vorhergehenden Anforderung in den Arbeitsspeicher (MM) auszulagernde, aber im gesonderten Ausgabespeicher (OUTBUF) noch zwischengespeicherte Daten an den Arbeitsspeicher (MM) übergeben sind.

8.     Cachespeicher zur Durchführung des Verfahrens nach einem der Ansprüche 1 bis 7, der aus einem Steuerspeicherteil (CA-PST) mit Prüflogik, einem Datenspeicherteil (DAT-SP) und einer gemeinsamen Cachespeichersteuerung (CA-ST) besteht, ergänzt
- durch einen zwischen dem Eingang des Arbeitsspeichers (MM) und dem Eingang des Datenspeicherteils (DAT-SP) angeordneten Eingabespeicher (INBUF) und einem zwischen dem Ausgang des Datenspeicherteils (DAT-SP) und dem Eingang des Arbeitsspeichers (MM) angeordneten Ausgabespeicher (OUTBUF), wobei sowohl der Eingabespeicher (INBUF) als auch der Ausgabespeicher (OUTBUF) eine der Anzahl der bei einer Datenübertragung zwischen Arbeitsspeicher (MM) und Cachespeicher (CACHE) betroffenen Dateneinheiten (DW) entsprechende Anzahl von einzeln auswählbaren Speicherabschnitten (z.B.INREG0 bis INREG3 bzw. OUTREG0 bis OUTREG3) aufweisen,
- durch ein gesondertes Register (SWPAR) zur Bereitstellung der Speicherparameter für aus dem Cachespeicher (CACHE) an den Arbeitsspeicher (MM) zu übergebende Daten,
- durch eine vom Ausgang des Eingabespeichers (INBUF) zum Ausgaberegister (RDAT) für Lesedaten der Verarbeitungseinrichtungen (CPU) durchschaltbaren Datenweg und
- durch einen vom Eingaberegister (WDAT) für Schreibdaten der Verarbeitungseinrichtungen (CPU) zum Eingang des Eingabespeichers (INBUF) durchschaltbaren Datenweg, **gekennzeichnet,**
- durch einen gesonderten Speicherabschnitt im Steuerspeicherteil (CA-PST) zur Zwischenspeicherung der die im Eingabespeicher (INBUF) des Cachespeichers (CACHE) zwischengespeicherten Daten identifizierenden Adresse,
- durch Einrichtungen zur Prüfung der zwischengespeicherten Adresse nach Überprüfung des Datenspeicherteils (DAT-SP) auf Vorliegen der im Rahmen einer Anforderung durch die Verarbeitungseinheiten (CPU) benötigten Daten und
- durch Einrichtungen zur Umsteuerung der aufgrund der im Eingabespeicher (INBUF) zwischengespeicherten Daten erledigbaren Zugriffsanforderung auf den Eingabespeicher (INBUF).

9.     Cachespeicher nach Anspruch 8, **gekennzeichnet** durch Einrichtungen zur Auslösung der Ausspeicherung der im Eingabespeicher (INBUF) vorhandenen gültigen Daten abhängig von einer nachfolgenden, an den Arbeitsspeicher (MM) weiterzuleitenden Zugriffsanforderung.

10.     Cachespeicher nach Anspruch 9, **gekennzeichnet durch** Einrichtungen zur vorübergehenden Sperrung der Weiterleitung von Zugriffsanforderungen an den Arbeitsspeicher (MM), bis wenigstens ein Speicherabschnitt des Eingabespeichers (INBUF) zur Aufnahme der ersten Dateneinheit der vom Arbeitsspeicher (MM) angeforderten Daten bereit ist.

11.     Cachespeicher nach Anspruch 9, **gekenn-**

zeichnet durch einen dem Eingabespeicher (INBUF) nachgeschalteten gleichartigen Sicherungsspeicher (SAVE-BUF) mit gleichgroßer Speicherkapazität, an den alle Dateneinheiten der im Eingabespeicher (INBUF) jeweils zwischengespeicherten gültigen Daten gleichzeitig und parallel zur Weiterleitung der Anforderung an den Arbeitsspeicher (MM) weiterleitbar sind, während die Dateneinheiten aus dem Sicherungsspeicher (SAVEBUF) an den Datenspeicherteil (DAT-SP) schrittweise nacheinander übertragbar sind.

12. Cachespeicher nach einem der Ansprüche 8 bis 11, gekennzeichnet durch Einrichtungen zur Synchronisierung des Lesevorganges für aus dem Datenspeicherteil (DAT-SP) in den Ausgabespeicher (OUTBUF) zu übertragende Dateneinheiten auszulagernder Daten mit dem Schreibvorgang für in den Datenspeicherteil (DAT-SP) zu übertragende Dateneinheiten bereitgestellter neuer Daten im Wechselspiel von Lesen und Schreiben für jeden Speicherabschnitt des Datenspeicherteils (DAT-SP).

13. Cachespeicher nach einem der Ansprüche 8 bis 12, gekennzeichnet durch Einrichtungen zur Übertragung der bei einer durch den Cachespeicher (CACHE) nicht erledigbaren Schreibanforderung von der anfordernden Verarbeitungseinheit (CPU) bereitgestellten Dateneinheit (im Register WDAT) an den Eingabepuffer (INBUF) gleichzeitig mit der Weiterleitung der Anforderung an den Arbeitsspeicher (MM) mit lagegerechter Zwischenspeicherung und anschließender Aufhebung der mit jeder vom Cachespeicher (CACHE) angenommenen Zugriffsanforderung durch eine Verarbeitungseinheit (CPU) gesetzten Anforderungssperre unabhängig von der Erledigung der Anforderung an den Arbeitsspeicher (MM) und durch Einrichtungen zur lagegerechten Einspeicherung der vom Arbeitsspeicher (MM) gelieferten Dateneinheiten in die noch nicht belegten Speicherabschnitte des Eingabespeichers (INBUF).

14. Cachespeicher nach einem der Ansprüche 8 bis 13, gekennzeichnet durch Einrichtungen zur Überwachung des Belegtzustandes des Ausgabespeichers (OUTBUF) und zur vorübergehenden Sperrung der Weiterleitung von Zugriffsanforderungen an den Arbeitsspeicher (MM), bis alle Dateneinheiten im Ausgabespeicher (OUTBUF) an den Arbeitsspeicher (MM) übertragen sind.

## Claims

1. Data exchange control methods between processing units (CPU) and a memory system in a data processing system, which memory system consists of a working memory (MM) with cash memory (CACHE) connected upstream of it, only data present in the cash memory (CACHE) being made available to the processing units (CPU) and changed by the latter, and changed data are only transmitted into the working memory (MM) if the associated memory area in the date memory component (DAT-SP) of the cash memory (CACHE) is required for other data, using a cash memory having a separate input memory (INBUF) for buffering data read out of the working memory (MM) before transfer into the data memory component (DAT-SP) of the cash memory and having a separate output memory (OUTBUF) for buffering changed data to be relocated from the data memory component (DAT-SP) of the case memory into the working memory (MM) before transfer of new data into the emptied section of the data memory component (DAT-SP) until being passed on to the working memory (MM), characterised in that data supplied from the working memory (MM) to the cash memory (CACHE) but still buffered in the separate input memory (INBUF) are treated as if already present in the cash memory during the testing of the cash memory (CACHE) for the presence of the desired data during the processing of a subsequent access request to the cash memory, and in that the address of the data buffered in the separate input memory (INBUF) are in each case also buffered until the transfer of the data into the data memory component (DAT-SP) and are taken into consideration during the testing of requests to the cash memory (CACHE).

2. Method according to Claim 1, characterised in that data supplied from the working memory (MM) to the cash memory (CACHE) but still buffered in the separate input memory (INBUF) are not passed on from the separate input memory (INBUF) until there is a subsequent request requesting an access to the working memory (MM) before the new data requested by the working memory (MM) are supplied, and in that requests to the cash memory (CACHE) are already evaluated as terminated as soon as the requested new data are available in the separate input memory (INBUF) as a component of the cash memory (CACHE).

3. Method according to Claim 2, characterised in that in the event of a request requesting an access to the working memory (MM), the said request is not passed on to the working memory (MM) until at least the first data unit of the data supplied by the working memory (MM) due to a preceding request but still buffered in the separate input memory (INBUF) is transferred into the data memory component (DAT-SP), and in that the remaining buffered data units are then transferred into the data memory component (DAT-SP) before the new data requested by the working memory (MM) are supplied by the working memory.

4. Method according to Claim 2, characterised in that in the event of a request requesting an access to the working memory (MM), the said request is passed on directly to the working memory (MM), and in that data still buffered in the separate input memory (INBUF) are first passed on to a save memory (SAVE-BUF) and from there passed on to the data memory component (DAT-SP).

5. Method according to one of Claims 1 to 4, characterised in that the transfer of data from the data memory component (DAT-SP) into the separate output memory (OUTBUF) and the transfer of prepared new data into the data memory component (DAT-SP) occurs in the overlapping, alternating process of rolling out and subsequent storage in each case of one data unit of the data to be exchanged.

6. Method according to one of Claims 1 or 5, characterised,
   - in that, in the event of the write request to the cash memory (CACHE) triggering an access to the working memory (MM), the data unit prepared with the write request is already buffered as a unit in the run up to the buffering of the data requested from the working memory (MM) and is mixed with the data units, subsequently arriving from the working memory (MM), of the buffered data and
   - in that the cash memory (CACHE) is enabled in good time for new requests by means of the processing unit (CPU), requests occurring before the termination of the write request only being taken into consideration if they do not request an access to the working memory (MM) and the new data are ready for accessing.

7. Method according to one of Claims 1 to 6, characterised in that, in the event of a request requesting an access to the working memory (MM), said request is not passed on to the working memory (MM) until data to be relocated from the cash memory (CACHE) into the working memory (MM) due to a proceeding request, but still buffered in the separate output memory (OUTBUF) are transferred to the working memory (MM).

8. Cash memory for carrying out the method according to one of Claims 1 to 7, which consists of a control memory component (CA-PST) with test logic, a data memory component (DAT-SP) and a common cash memory control (CA-ST), complemented
   - by an input memory (INBUF) arranged between the input of the working memory (MM) and the input of the data memory component (DAT-SP) and an output memory (OUTBUF) arranged between the output of the data memory component (DAT-SP) and the input of the working memory (MM), both the input memory (INBUF) and the output memory (OUTBUF) having a number of individual-selectable memory sections (e.g. INREG0 to INREG3 or OUTREG0 to OUTREG3) which corresponds to the number of affected data units (DW) in the event of a data transmission between working memory (MM) and cash memory (CACHE),
   - by a separate register (SWPAR) for preparing the memory parameters for data to the transferred out of the cash memory (CACHE) to the working memory (MM),
   - by a data path which can be switched through from the output of the input memory (INBUF) to the output register (RDAT) for read data of the processing unit (CPU) and
   - by a data path which can be switched through from the input register (WDAT) for write data of the processing units (CPU) to the input of the input memory (INBUF), characterised,
   - by a separate memory section in the control memory component (CA-PST) for buffering the address identifying the data buffered in the input memory (INBUF) of the cash memory (CACHE),
   - by devices for testing the buffered address after testing the data memory component (DAT-SP) for the presence of data required for a request by the processing units (CPU) and
   - by devices for changing over the access request which can be processing on the basis of the data buffered in the input memory (INBUF) to the input memory (INBUF).

9. Cash memory according to Claim 8, characterised by devices for triggering the rolling out of valid data present in the input memory (INBUF) in dependence on a subsequent access request to be passed on to the working memory (MM).

10. Cash memory according to Claim 9, characterised by devices for temporary inhibiting of the passing of access requests to the working memory (MM) until at least one memory section of the input memory (INBUF) is ready to receive the first data unit of the data requested by the working memory (MM).

11. Cash memory according to Claim 9, characterised by a save memory (SAVE-BUF) of the same kind as the input memory (INBUF) and connected downstream of it having identical memory capacity and to which all the data units of the valid data respectively buffered in the input memory (INBUF) can be passed on simultaneously and in parallel with the passing on of the request to the working memory (MM), whilst the data units from the save memory (SAVE-BUF) can be transferred to the data memory component (DAT-SP) in successive steps.

12. Cash memory according to one of Claims 8 to 11, characterised by devices for synchronising the read process for data units, to be transmitted out of the data memory component (DAT-SP) into the output memory (OUTBUF), of the data to be relocated with the write process for data units, to be transmitted into the data memory component (DAT-SP), of new prepared data in the alternating process of reading and writing for each memory section of the data memory component (DAT-SP).

13. Cash memory according to one of Claims 8 to 12, characterised by devices for transmitting the data unit (in the register WDAT), in the event of a write request which cannot be processed by the cash memory (CACHE), prepared by the requesting processing unit (CPU) to the input buffer (INBUF) at the same time as the passing on of the request to the working memory (MM) with correctly located buffering and subsequent cancelling of the request lock which is set with every access request by a processing unit (CPU) received by the cash memory (CACHE) independently of the processing of the request to the working memory (MM), and by devices for the correctly located storage of the data units supplied from the working memory (MM) into the not yet occupied memory sections of the input memory (INBUF).

14. Cash memory according to one of Claims 8 to 13, characterised by devices for monitoring the degree of occupancy of the output memory (OUTBUF) and for the temporary inhibiting of the passing on of access requests to the working memory (MM) until all the data units in the output memory (OUTBUF) are transmitted to the working memory (MM).

## Revendications

1. Procédé pour commander l'échange de données entre des unités de traitement (CPU) et un système de mémoire constitué par une mémoire de travail (MM), en amont de laquelle est branchée une antémémoire (CACHE), et situé dans une installation de traitement de données, et selon lequel seules des données présentes dans l'antémémoire (CACHE) sont disponibles pour les unités de traitement (CPU) et sont modifiées par ces dernières, et des données modifiées sont transférées dans la mémoire de travail (MM) uniquement lorsque la zone de mémoire associée située dans la partie formant mémoire de données (DAT-SP) de l'antémémoire (CACHE) est nécessaire pour d'autres données, moyennant l'utilisation d'une antémémoire, d'une mémoire d'entrée séparée (INBUF) servant à mémoriser temporairement des données lues à partir de la mémoire de travail (MM), avant le transfert dans la partie formant mémoire de données (DAT-SP) de l'antémémoire, et d'une mémoire de sortie séparée (OUTBUF) servant à mémoriser temporairement des données modifiées devant être mémorisées depuis la partie formant mémoire de données (DAT-SP) de l'antémémoire, dans la mémoire de travail (MM), avant le transfert de nouvelles données dans la section vidée de la partie formant mémoire de données (DAT-SP) jusqu'à la retransmission à la mémoire de travail (MM), caractérisé par le fait que des données délivrées par la mémoire de travail (MM) à l'antémémoire (CACHE), mais encore mémorisées temporairement dans la mémoire d'entrée séparée (INBUF), sont traitées comme étant déjà présentes dans l'antémémoire, lors du contrôle de la présence des données désirées dans l'antémémoire (CACHE) dans le cadre du traitement d'une demande ultérieure d'accès présentée à l'antémémoire, et que l'adresse des données mémorisées temporairement dans la mémoire d'entrée séparée (INBUF) est également mémorisée temporairement respectivement jusqu'au transfert des données dans la partie formant mémoire de données (DAT-SP) et est prise en compte lors du contrôle de demandes présentées à l'antémémoire (CACHE).

2.  procédé suivant la revendication 1, caractérisé par le fait que des données délivrées par la mémoire de travail (MM) à l'antémémoire (CACHE) mais encore mémorisées temporairement dans la mémoire d'entrée séparée (INBUF) sont retransmises uniquement lors d'une demande ultérieure, nécessitant un accès à la mémoire de travail (MM), à partir de la mémoire d'entrée séparée (INBUF), avant que les nouvelles données demandées par la mémoire de travail (MM) soient délivrées, et que des demandes présentées à l'antémémoire (CACHE) sont déjà évaluées comme étant terminées dès que les nouvelles données demandées sont disponibles dans la mémoire d'entrée séparées (INBUF) en tant que partie constitutive de l'antémémoire (CACHE).

3.  Procédé suivant la revendication 2, caractérisé par le fait que dans le cas d'une demande requérant un accès à la mémoire de travail (MM), cette demande est retransmise à la mémoire de travail (MM) uniquement lorsque, parmi les données délivrées par la mémoire de travail (MM) sur la base d'une demande précédente, mais encore mémorisées temporairement dans la mémoire d'entrée séparée (INBUF), au moins la première unité de données est transférée dans la partie formant mémoire de données (DAT-SP), et que les autres unités de données mémorisées temporairement sont ensuite transférées dans la partie formant mémoire de données (DAT-SP) avant que les nouvelles données demandées par la mémoire de travail (MM) soient délivrées par cette mémoire de travail.

4.  Procédé suivant la revendication 2, caractérisé par le fait que dans le cas d'une demande requérant un accès à la mémoire de travail (MM), cette demande est retransmise directement à cette mémoire (MM) et que des données encore mémorisées temporairement dans la mémoire d'entrée séparée (INBUF) sont retransmises tout d'abord à une mémoire de sauvegarde (SAVEBUF) et, à partir de là, à la partie formant mémoire de données (DAT-SP).

5.  Procédé suivant l'une des revendications 1 à 4, caractérisé par le fait que le transfert de données depuis la partie formant mémoire de données (DAT-SP) dans la mémoire de sortie séparée (OUTBUF) et le transfert de nouvelles données préparées dans la partie formant mémoire de données (DAT-SP) se déroulent en chevauchement avec alternance entre la lecture et la mémorisation ultérieure respectivement d'une unité des données devant être échangées.

6.  Procédé suivant l'une des revendications 1 ou 5, caractérisé par le fait
    -   que dans le cas d'une demande d'enregistrement qui déclenche un accès à la mémoire de travail (MM) et qui est présentée à l'antémémoire (CACHE), l'unité de données préparée avec la demande d'enregistrement est mémorisée temporairement déjà en fonction des unités, avant la mémorisation temporaire des données demandées à partir de la mémoire de travail (MM), et est mélangée aux unités qui arrivent ultérieurement à partir de la mémoire de travail (MM), des données devant être mémorisées temporairement, et
    -   que l'antémémoire (CACHE) est libérée prématurément pour de nouvelles demandes par les unités de traitement (CPU), auquel cas des demandes arrivant avant la fin de la demande d'enregistrement ne sont pas prises en compte lorsqu'elles ne requièrent aucun accès à la mémoire de travail (MM), et les nouvelles données sont prêtes pour un accès.

7.  Procédé suivant l'une des revendications 1 à 6, caractérisé par le fait que dans le cas d'une demande nécessitant un accès à la mémoire de travail (MM), cette demande est retransmise à cette mémoire de travail (MM) uniquement lorsque des données devant être mémorisées depuis l'antémémoire (CACHE) dans la mémoire de travail (MM) sur la base d'une demande précédente, mais encore mémorisées temporairement dans la mémoire de sortie séparée (OUTBUF), sont retransmises à la mémoire de travail (MM).

8.  Antémémoire pour la mise en oeuvre du procédé suivant l'une des revendications 1 à 7, constituée par une partie formant mémoire de commande (CA-PST) comportant une unité logique de contrôle, une partie formant mémoire de données (DAT-SP) et une unité commune (CA-ST) de commande de l'antémémoire, complétée

- par une mémoire d'entrée (INBUF) disposée entre l'entrée de la mémoire de travail (MM) et l'entrée de la partie formant mémoire de données (DAT-SP), et une mémoire de sortie (OUTBUF) disposée entre la sortie de la partie formant mémoire de données (DAT-SP) et l'entrée de la mémoire de travail (MM), auquel cas aussi bien la mémoire d'entrée (INBUF) que la mémoire de sortie (OUTBUF) possèdent un nombre, qui correspond au nombre des unités de données (DW) concernées par une transmission de données entre la mémoire de travail (MM) et l'antémémoire (CACHE), de sections de mémoire (par exemple INREG0 à INREG3 ou OUTREG0 à OUTREG3) pouvant être sélectionnées individuellement,
- par un registre séparé (SWPAR) pour la préparation des paramètres de mémorisation pour les données devant être transférées de l'antémémoire (CACHE) à la mémoire de travail (MM),
- par un trajet de transmission de données pouvant être raccordé directement de la sortie de la mémoire d'entrée (INBUF) au registre de sortie (RDAT) pour des données de lecture des dispositifs de traitement (CPU), et
- par un trajet de transmission de données pouvant être établi directement du registre d'entrée (WDAT) pour les données d'enregistrement des dispositifs de traitement (CPU) à l'entrée de la mémoire d'entrée (INBUF),
caractérisée
- par une section de mémoire séparée située dans la partie formant mémoire de commande (CA-PST) pour la mémorisation temporaire de l'adresse identifiant les données mémorisées temporairement dans la mémoire d'entrée (INBUF) de l'antémémoire (CACHE),
- par des dispositifs pour contrôler l'adresse mémorisée temporairement après le contrôle de la partie formant mémoire de données (DAT-SP) pour savoir si les données requises par les unités de traitement (CPU) dans le cas d'une demande sont présentes, et
- par des dispositifs servant à renvoyer la demande d'accès, pouvant être satisfaite sur la base des données mémorisées temporairement dans la mémoire d'entrée (INBUF), à cette mémoire.

9. Antémémoire suivant la revendication 8, caractérisée par des dispositifs pour déclencher la lecture des données valables, présentes dans la mémoire d'entrée (INBUF), en fonction d'une demande ultérieure d'accès, devant être retransmise à la mémoire de travail (MM).

10. Antémémoire suivant la revendication 9, caractérisée par des dispositifs pour bloquer temporairement la retransmission de demandes d'accès à la mémoire de travail (MM), jusqu'à ce qu'au moins une section de la mémoire d'entrée (INBUF) soit prête pour la réception de la première unité des données demandées par la mémoire de travail (MM).

11. Antémémoire suivant la revendication 9, caractérisée par une mémoire de sauvegarde (SAVE-BUF) identique, branchée en aval de la mémoire d'entrée (INBUF) et possédant une capacité de mémoire identique et à laquelle toutes les unités des données valables mémorisées temporairement respectivement dans la mémoire d'entrée (INBUF) peuvent être retransmises simultanément et en parallèle avec la retransmission de la demande à la mémoire de travail (MM), tandis que les unités de données peuvent être transmises successivement pas-à-pas depuis la mémoire de sauvegarde (SAVE-BUF) à la partie formant mémoire de données (DAT-SP).

12. Antémémoire suivant l'une des revendications 8 à 11, caractérisée par les dispositifs servant à synchroniser le processus de lecture pour des unités de données devant être lues, qui doivent être transférés depuis la partie formant mémoire de données (DAT-SP) à la mémoire de sortie (OUT-BUF), avec l'opération d'enregistrement pour des unités de nouvelles données préparées, qui doivent être transférées dans la partie formant mémoire de données (DAT-SP), et ce en alternance pour la lecture et l'enregistrement pour chaque section de mémoire de la partie formant mémoire de données (DAT-SP).

13. Antémémoire suivant l'une des revendications 8 à 12, caractérisé par des dispositifs pour transmettre l'unité de données (située dans le registre WDAT) préparés par l'unité de traitement (CPU) effectuant la demande, dans le cas d'une demande d'enregistrement non satisfaite par l'antémémoire (CACHE), au tampon d'entrée (INBUF) en même temps que s'effectue la retransmission de la demande à la mémoire de travail (MM) avec mémorisation temporaire, correcte du point de vue position, et suppression ultérieure du blocage de la demande introduit lors de chaque demande d'accès, acceptée par l'antémémoire (CACHE), par une unité de traitement (CPU), indépendamment du fait que la demande présentée à la mémoire de travail (MM) est satisfaite, et par des dispositifs servant à mémoriser, d'une manière correcte en position, les unités de données délivrées par la mémoire de travail (MM), dans les sections non encore occupées de la mémoire d'entrée (INBUF).

14. Antémémoire suivant l'une des revendications 8 à 13, caractérisée par des dispositifs servant à contrôler l'état d'occupation de la mémoire de sortie (OUTBUF) et à bloquer de façon temporaire la retransmission de demandes d'accès à la mémoire de travail (MM), jusqu'à ce que toutes les unités de données situées dans la mémoire de sortie (OUTBUF) soient transférées dans la mémoire de travail (MM).

# FIG 1

EP 0 280 954 B1

# FIG 2

# FIG 3A

# FIG 3B

Ⓑ

| DAT- SP- SPERRE SETZEN |

Ⓒ

| DAT- SP- AD ERMITTELN ( INBUF) |

J

⟨ AUSLAGERN ? ⟩ ────────────────┐

N                                │

                          | AD DER AUSZULAGERNDEN |
                          | DATEN ERMITTELN |

                    ✳     | DAT- SP ⟶ OUTBUF |

                          | LADEN SWPAR |

                          | SWPAR- VALID SETZEN |

| DW INBUF ⟶ DAT- SP |              ⟨ MM REQ ? ⟩ ──N──┐
| (MIND. 1 WEGEN WDATA) |                  │ J         │
                                   ⟨ MM FREI ? ⟩ ──N──┐
✳                                          │ J
| REST. DW INBUF ⟶ DAT- SP |

| STEUERDATEN ANPASSEN |          | ÜBERGABE SWPAR |
| (FÜR DAT- SP) |                 | UND OUTBUF AN MM |

| DAT- SP- SPERRE AUFHEBEN |      | SWPAR- VALID AUFHEBEN |

( STOP )                         ( STOP )

# FIG 4A

(A)

MISS- SPERRE SETZEN

SWPAR - VALID ?  J

N

LADEN MPAR

MM FREI ?  N

J

ÜBERGABE MPAR⟶ MM

MM REQ ?  N

J

SCHREIBEN ?  N

J

I. DW⟶ INBUF
SPEICHERGER. ADRESSIERT

I. DW⟶ INBUF
SPEICHERGER. ADRESSIERT

RESTLICHE DW⟶ INBUF

STEUERDATEN ANPASSEN
(FÜR INBUF- BANK)

DAT- SP- SPERRE ?  J

N

MISS- SPERRE AUFHEBEN

(STOP)

INBUF VALID ?  J  (B)

N

(C)

SICHERN AD FÜR INBUF- TAG

SCHREIBEN ?  N

J

WDAT ⟶ INBUF (BYSEL)
SPEICHERGER. ADRESSIERT

I. DW INBUF ⟶ RDAT

ÜBERGABE AN CPU

ANFORDERUNGS- SPERRE
AUFHEBEN

(STOP)

# FIG 4B

STOP          STOP